(19) Europäisches Patentamt
European Patent Office
Office européen des brevets

(11) EP 3 324 528 A1

(12) EUROPÄISCHE PATENTANMELDUNG

(43) Veröffentlichungstag:
23.05.2018 Patentblatt 2018/21

(51) Int Cl.:
H02M 1/32 (2007.01)    H02M 3/335 (2006.01)
H02M 1/00 (2006.01)

(21) Anmeldenummer: 16199837.2

(22) Anmeldetag: 21.11.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Siemens Aktiengesellschaft
80333 München (DE)

(72) Erfinder:
• Denzner, Michael
90482 Nürnberg (DE)
• Fromme, Christopher
90763 Fürth (DE)

(54) GLEICHSPANNUNGSWANDLER UND VERFAHREN ZU DESSEN BETRIEB

(57) Die Erfindung betrifft einen Gleichspannungs-wandler (1) und ein Verfahren zu dessen Betrieb. Der Gleichspannungswandler (1) umfasst einen Wechsel-richter (3), einen Transformator (5), einen Gleichrichter (7), eine Clampingbaugruppe (9) und eine Steuereinheit (11). Der Wechselrichter (3) weist vier zu einer Wechsel-richter-Vollbrücke verschaltete primäre Halbleiterschal-ter (Q1 bis Q4) zum Umrichten einer Eingangsgleich-spannung ($U_{in}$) in eine Wechselspannung auf. Der Trans-formator (5) weist eine in dem Brückenzweig der Wech-selrichter-Vollbrücke angeordnete Primärwicklung (15) auf. Der Gleichrichter (7) ist mit einer Sekundärwicklung (17) des Transformators (5) verbunden und zum Gleich-richten einer Sekundärspannung des Transformators (5) ausgebildet. Die Clampingbaugruppe (9) weist einen Zu-satz-Halbleiterschalter (Q9) und einen zu dem Zusatz-Halbleiterschalter (Q9) in Reihe geschalteten Clam-pingkondensator (C1) auf. An der Clampingbaugruppe (9) liegt die gleichgerichtete Sekundärspannung ($U_2$) des Transformators (5) an. Die Steuereinheit (11) ist zur An-steuerung der primären Halbleiterschalter (Q1 bis Q4) und des Zusatz-Halbleiterschalters (Q9) ausgebildet.

FIG 1

**Beschreibung**

Die Erfindung betrifft einen Gleichspannungswandler, der als ein so genannter Phase-Shifted-Full-Bridge-Wandler ausgebildet ist, d.h. als ein Vollbrücken-Gegentaktwandler mit phasenmodulierter Ansteuerung.

Ein derartiger Gleichspannungswandler weist vier zu einer Vollbrücke verschaltete Halbleiterschalter zum Umrichten einer Eingangsgleichspannung in eine Wechselspannung, einen Transformator, an den primärseitig die Wechselspannung angelegt wird, und einen Gleichrichter zum Gleichrichten der Sekundärspannung des Transformators auf. Die von dem Wechselrichter erzeugte Wechselspannung nimmt abwechselnd während einer ersten Aktivphase ein oberes Spannungsniveau und während einer zweiten Aktivphase ein unteres Spannungsniveau an. Zwischen zwei aufeinander folgenden Aktivphasen wird der Transformator in einer Freilaufphase betrieben, in der der Transformator primärseitig kurzgeschlossen wird.

Neben den bekannten Vorteilen, insbesondere dem Nullspannungsschalten, hat ein derartiger Gleichspannungswandler auch Nachteile. Beispielsweise fließt während der Freilaufphasen primärseitig ein Freilaufstrom, der das Nullspannungsschalten ermöglichen soll. Der Betrag des Freilaufstroms, der zum Erreichen des Nullspannungsschaltens erforderlich ist, steht in Abhängigkeit zur Eingangsgleichspannung. Der Betrag des Freilaufstroms, der sich letztlich einstellt, hängt jedoch vom Laststrom ab. Je nach Eingangsgleichspannung und Laststrom kann sich somit ein Freilaufstrom einstellen, dessen Betrag erheblich größer ist als es zum Erreichen des Nullspannungsschaltens erforderlich wäre. Dadurch wird der primärseitige Effektivstrom sehr groß, was beträchtliche Leitendverluste verursachen kann. Ebenso kann sich ein Freilaufstrom einstellen, der nicht ausreicht, um das Nullspannungsschalten zu ermöglichen, was erhebliche Schaltverluste verursachen kann. Ferner ergeben sekundärseitig die Streuinduktivitäten des Transformators und die parasitären Kapazitäten des Gleichrichters ein schwingfähiges System. Durch Rückströme im Gleichrichter entsteht dadurch eine Schwingung, deren Amplitude je nach Aufbau des Gleichspannungswandlers weit über der transformierten Primärspannung liegen und die über eine gesamte Aktivphase anhalten kann.

Der Erfindung liegt die Aufgabe zugrunde, einen verbesserten Gleichspannungswandler, der als ein Phase-Shifted-Full-Bridge-Wandler ausgebildet ist, und ein Verfahren zu dessen Betreiben anzugeben.

Die Aufgabe wird erfindungsgemäß hinsichtlich des Gleichspannungswandlers durch die Merkmale des Anspruchs 1 und hinsichtlich des Verfahrens durch die Merkmale des Anspruchs 6 gelöst.

Vorteilhafte Ausgestaltungen der Erfindung sind Gegenstand der Unteransprüche.

Ein erfindungsgemäßer Gleichspannungswandler umfasst einen Wechselrichter, einen Transformator, einen Gleichrichter, eine Clampingbaugruppe und eine Steuereinheit. Der Wechselrichter weist vier zu einer Wechselrichter-Vollbrücke verschaltete primäre Halbleiterschalter zum Umrichten einer Eingangsgleichspannung in eine Wechselspannung auf. Der Transformator weist eine in dem Brückenzweig der Wechselrichter-Vollbrücke angeordnete Primärwicklung und eine Sekundärwicklung auf. Der Gleichrichter ist mit der Sekundärwicklung verbunden und zum Gleichrichten einer Sekundärspannung des Transformators ausgebildet. Die Clampingbaugruppe weist einen Zusatz-Halbleiterschalter und einen zu dem Zusatz-Halbleiterschalter in Reihe geschalteten Clampingkondensator auf. An der Clampingbaugruppe liegt die gleichgerichtete Sekundärspannung des Transformators an. Die Steuereinheit ist zur Ansteuerung der primären Halbleiterschalter und des Zusatz-Halbleiterschalters ausgebildet.

Die Formulierung, dass der Transformator eine in dem Brückenzweig der Wechselrichter-Vollbrücke angeordnete Primärwicklung und eine Sekundärwicklung aufweist, ist dabei so zu verstehen, dass der Transformator wenigstens eine derartige Primärwicklung und wenigstens eine Sekundärwicklung aufweist, d.h. die Formulierung schließt nicht aus, dass der Transformator mehr als eine derartige Primärwicklung und/oder mehr als eine Sekundärwicklung aufweist. Entsprechend beziehen sich im Folgenden die auf die Primärwicklung und die Sekundärwicklung bezogenen Formulierungen auf jede derartige Primärwicklung und jede Sekundärwicklung des Transformators.

Ein erfindungsgemäßer Gleichspannungswandler ist somit als ein so genannter Phase-Shifted-Full-Bridge-Wandler ausgebildet, der auf der Sekundärseite des Transformators eine Clampingbaugruppe aufweist. Die Clampingbaugruppe ermöglicht einerseits eine Stellung eines Primärstroms, der während einer Freilaufphase als ein primärer Freilaufstrom durch die Primärwicklung des Transformators fließt, und andererseits eine Klemmung der Sekundärspannung.

Dabei wird ausgenutzt, dass der primäre Freilaufstrom durch die Clampingbaugruppe beeinflusst werden kann, wenn der Zusatz-Halbleiterschalter der Clampingbaugruppe nach dem Beginn jeder Freilaufphase abgeschaltet und nach dem Beginn jeder Aktivphase eingeschaltet wird. Dabei hängt die Höhe des primären Freilaufstroms wesentlich von dem Zeitpunkt ab, zu dem der Zusatz-Halbleiterschalter nach dem Beginn einer Freilaufphase abgeschaltet wird. Über diesen Zeitpunkt kann somit der primäre Freilaufstrom gestellt werden, um vorteilhaft durch primäre Freilaufströme verursachte Leitendverluste der primären Halbleiterschalter sowie der Primärwicklung zu reduzieren und den Wirkungsgrad des Gleichspannungswandlers zu erhöhen. Durch die Klemmung der Sekundärspannung mittels der Clampingbaugruppe können ferner vorteilhaft Schwingungen der Sekundärspannung deutlich reduziert bzw. vermieden werden, wodurch der Aufbau des Gleichrichters optimiert werden kann, da dessen Komponenten nicht für Schwingungen der Sekundärspannung mit großen Amplituden ausgelegt werden müssen.

Eine Ausgestaltung des Gleichspannungswandlers sieht vor, dass der Gleichrichter vier zu einer Gleichrichter-Vollbrücke verschaltete, von der Steuereinheit ansteuerbare sekundäre Halbleiterschalter aufweist, die Sekundärwicklung des Transformators in dem Brückenzweig der Gleichrichter-Vollbrücke angeordnet ist und die Clampingbaugruppe parallel zu der Gleichrichter-Vollbrücke geschaltet ist. Diese Ausgestaltung des Gleichspannungswandlers sieht also einen aktiven Gleichrichter vor, der durch sekundäre Halbleiterschalter steuerbar ist. Die Ausbildung des Gleichrichters als ein aktiver Gleichrichter ermöglicht vorteilhaft eine Optimierung der Leistung und des Wirkungsgrades des Gleichspannungswandlers durch eine geeignete Ansteuerung der sekundären Halbleiterschalter.

Eine weitere Ausgestaltung des Gleichspannungswandlers sieht vor, dass der Gleichrichter ausgangsseitig ein LC-Filter mit einer Drossel und einem Filterkondensator aufweist. Das LC-Filter ermöglicht vorteilhaft eine Glättung der gleichgerichteten Sekundärspannung des Transformators, um eine möglichst konstante Ausgangsspannung des Gleichspannungswandlers zu erzielen.

Eine weitere Ausgestaltung des Gleichspannungswandlers sieht vor, dass jeder primäre Halbleiterschalter und/oder jeder sekundäre Halbleiterschalter und/oder der Zusatz-Halbleiterschalter als ein Feldeffekttransistor, beispielsweise als ein MOSFET (= Metal-Oxide-Semiconductor Field-Effect Transistor), ausgebildet ist. Die Verwendung von Feldeffekttransistoren hat beispielsweise gegenüber der Verwendung von Bipolartransistoren mit isolierter Gate-Elektrode (IGBT) den Vorteil relativ geringer Schaltverluste, insbesondere beim Abschalten der Halbleiterschalter.

Eine weitere Ausgestaltung des Gleichspannungswandlers sieht vor, dass der Transformator ein Luftspalttransformator ist. Ein Luftspalttransformator ermöglicht gegenüber einem Transformator ohne Luftspalt eine höhere Toleranz gegenüber Asymmetrien in der Ansteuerung der primären Halbleiterschalter. Derartige Asymmetrien können bei einem Vollbrückenwandler nämlich dazu führen, dass die Primärspannung des Transformators einen Gleichanteil erhält. Ist der Gleichanteil groß genug, kann der Transformator in eine Sättigung geraten, die unbedingt zu vermeiden ist. Bei einem Luftspalttransformator ist der Sättigungsstrom viel höher als bei einem Transformator ohne Luftspalt. Um den Transformator in Sättigung zu bringen, muss der Primärstrom bei einem Luftspalttransformator daher einen deutlich größeren Gleichanteil aufweisen als bei einem Transformator ohne Luftspalt. Diesem Gleichanteil stehen aber die ohmschen Widerstände des Lufttransformators selbst, der Leiterbahnen auf der Platine und der primären Halbleiterschalter entgegen. Daher weist ein Gleichspannungswandler mit einem Luftspalttransformator eine höhere Toleranz gegen Asymmetrien in der Ansteuerung der primären Halbleiterschalter auf als ein Gleichspannungswandler mit einem Transformator ohne Luftspalt. Ohne die Clampingbaugruppe hätte die Verwendung eines Luftspalttransformators jedoch den gravierenden Nachteil, dass durch den höheren Magnetisierungsstrom, den ein Luftspalttransformator gegenüber einem sonst gleichartigen Transformator ohne Luftspalt aufweist, permanent ein größerer Primärstrom flösse als bei einem Transformator ohne Luftspalt. Da durch die Clampingbaugruppe aber der Freilaufstrom gestellt werden kann, wird dieser Nachteil in der Freilaufphase beseitigt und der Effektivwert des Freilaufstroms kann auf der Sekundärseite sogar gesenkt werden. Außerdem ergeben sich im Zusammenhang mit der Clampingbaugruppe bessere Stromverläufe, so dass auch in den Aktivphasen der Effektivwert des Primärstroms nicht ansteigt und ebenfalls gesenkt werden kann. Der Vorteil der Verwendung eines Luftspalttransformators ergibt sich daher nur in Zusammenhang mit der Clampingbaugruppe.

Bei dem erfindungsgemäßen Verfahren zum Betrieb eines erfindungsgemäßen Gleichspannungswandlers wird von dem Wechselrichter eine Wechselspannung erzeugt, die abwechselnd während einer ersten Aktivphase ein oberes Spannungsniveau und während einer zweiten Aktivphase ein unteres Spannungsniveau annimmt, und der Transformator wird zwischen je zwei aufeinander folgenden Aktivphasen in einer Freilaufphase betrieben, in der die Primärwicklung kurzgeschlossenen wird. Die Clampingbaugruppe wird durch den Zusatz-Halbleiterschalter nach dem Beginn jeder Freilaufphase abgeschaltet und nach dem Beginn jeder Aktivphase eingeschaltet.

Wie oben bereits ausgeführt wurde, ermöglicht das Einschalten der Clampingbaugruppe nach dem Beginn jeder Aktivphase und das Abschalten der Clampingbaugruppe nach dem Beginn jeder Freilaufphase die Beeinflussung der primären Freilaufströme während der Freilaufphasen und dadurch die Reduktion von durch primäre Freilaufströme verursachten Leitendverlusten der primären Halbleiterschalter und der Primärwicklung.

Zusätzlich wird auch in Teillastbereichen das Nullspannungsschalten ermöglicht, in denen ein herkömmlicher Phase-Shifted-Full-Bridge-Wandler kein Nullspannungsschalten mehr erreichen kann. Das wird dadurch möglich, dass der primäre Freilaufstrom auch größer als der Primärstrom in einer Aktivphase gestellt werden kann. Dadurch können vor allem die guten EMV-Eigenschaften (EMV = elektromagnetische Verträglichkeit) des Gleichspannungswandlers erhalten werden, weil harte Schaltflanken weiterhin vermieden werden.

Ferner können durch die Klemmung der Sekundärspannung mittels der Clampingbaugruppe vorteilhaft Schwingungen der Sekundärspannung deutlich reduziert bzw. vermieden werden.

Eine Ausgestaltung des Verfahrens sieht vor, dass eine Abschaltverzögerungszeitdauer für das Abschalten der Clampingbaugruppe nach dem Beginn einer Freilaufphase als eine Stellgröße für eine Regelung eines Primärstroms verwendet wird, der während der Freilaufphase als ein primärer Freilaufstrom durch die Primärwicklung des Transformators fließt und der durch die Abschaltverzögerungszeitdauer auf einen Sollwert geregelt wird. Der Sollwert des primären Freilaufstroms wird beispielsweise in Abhängigkeit von der Eingangsgleichspannung und/oder von einem Ausgangsstrom des Gleichspannungswandlers bestimmt. Diese Ausgestaltung des Verfahrens nutzt aus, dass die Höhe des primären Freilaufstroms wesentlich von dem Zeitpunkt abhängt, zu dem die Clampingbaugruppe nach dem Beginn einer Freilaufphase abgeschaltet wird, denn der primäre Freilaufstrom wird umso kleiner je später dieser Zeitpunkt (innerhalb eines kleinen, sinnvollen Fensters) gelegt wird. Daher eignet sich die Abschaltverzögerungszeitdauer als Stellgröße zur Regelung eines primären Freilaufstroms auf einen Sollwert.

Eine weitere Ausgestaltung des Verfahrens sieht vor, dass die Clampingbaugruppe nach dem Beginn einer Aktivphase zu einem Zeitpunkt eingeschaltet wird, zu dem die gleichgerichtete Sekundärspannung des Transformators in dieser Aktivphase einen Endwert erreicht hat. Dadurch wird der Zeitpunkt der Klemmung der Sekundärspannung zur Unterdrückung von Schwingungen der gleichgerichteten Sekundärspannung vorteilhaft eingestellt. Sobald nämlich die gleichgerichtete Sekundärspannung ihren Endwert erreicht hat, fließt ein Strom über den Zusatz-Halbleiterschalter in den Clampingkondensator. Das ist genau der Strom, der sonst die Schwingungen der gleichgerichteten Sekundärspannung anregen würde. Die Schwingungen werden somit vermieden bzw. stark reduziert. Durch das Einschalten der Clampingbaugruppe kann der Clampingkondensator die zuvor aufgenommene Energie wieder zurückspeisen und an den Ausgang des Gleichspannungswandlers abgeben. Je eher die Clampingbaugruppe durch den Zusatz-Halbleiterschalter eingeschaltet wird, desto kleiner werden die Verluste. Wenn die Clampingbaugruppe jedoch zu früh eingeschaltet werden würde, würde der Clampingkondensator über den Gleichrichter kurzgeschlossen und Komponenten des Gleichrichters, beispielsweise sekundäre Halbleiterschalter im Falle eines aktiven Gleichrichters, zerstören.

Eine weitere Ausgestaltung des Verfahrens sieht vor, dass der Gleichrichter nach dem Beginn jeder Aktivphase um eine Aktivschaltungsverzögerungszeitdauer verzögert aktiv geschaltet wird, wenn der Gleichrichter vier zu einer Gleichrichter-Vollbrücke zusammengeschaltete, von der Steuereinheit ansteuerbare sekundäre Halbleiterschalter aufweist und die Sekundärwicklung des Transformators in dem Brückenzweig der Gleichrichter-Vollbrücke angeordnet ist. Die Aktivschaltungsverzögerungszeitdauer ist dabei vorzugsweise kleiner oder gleich einer Kommutierungsdauer eines sekundärseitigen Kommutierungsvorgangs nach dem Beginn der jeweiligen Aktivphase. Die Aktivschaltungsverzögerungszeitdauer wird beispielsweise in Abhängigkeit von wenigstens einem der folgenden Parameter bestimmt:

- Eingangsgleichspannung,
- Hauptinduktivität des Transformators,
- primäre Streuinduktivität des Transformators,
- sekundäre Streuinduktivität des Transformators,
- Dauer der vorhergehenden Aktivphase,
- Ausgangsstrom des Gleichspannungswandlers zum Zeitpunkt des Beginns der Aktivphase,
- Primärstrom durch die Primärwicklung zum Zeitpunkt des Beginns der Aktivphase.

Ferner wird beispielsweise eine Passivschaltungsverzögerungszeitdauer vorgegeben und der Gleichrichter wird nach jedem Abschalten der Clampingbaugruppe um die Passivschaltungsverzögerungszeitdauer verzögert passiv geschaltet.

Die vorgenannten Ausgestaltungen des Verfahrens beziehen sich also auf die Ausführung des Gleichspannungswandlers mit einem aktiven Gleichrichter. Unter einer Aktivschaltung des Gleichrichters wird ein Schaltzustand der sekundären Halbleiterschalter verstanden, in dem die Sekundärspannung des Transformators mit einer definierten Polarität an den Ausgang des Gleichrichters gelegt wird. Unter einer Passivschaltung des Gleichrichters wird ein Schaltzustand der sekundären Halbleiterschalter verstanden, in dem alle sekundären Halbleiterschalter eingeschaltet sind, so dass der Brückenzweig der Gleichrichter-Vollbrücke kurzgeschlossen ist. Durch die Verzögerung des Aktivschaltens des Gleichrichters nach dem Beginn der jeweiligen Aktivphase werden vorteilhaft Leitendverluste vermieden, die bei einem zu frühen Aktivschalten des Gleichrichters durch einen Stromfluss durch Bodydioden sekundärer Halbleiterschalter entstehen würden. Durch ein Aktivschalten des Gleichrichters am Ende oder vor dem Ende des sekundärseitigen Kommutierungsvorgangs wird vorteilhaft berücksichtigt, dass ein Aktivschalten nach dem Ende des Kommutierungsvorgangs einem sekundärseitigen Kurzschließen des Transformators entspricht und zu hohen Strömen und dadurch verursachten Verlusten führen würde. Besonders bevorzugt wird der Gleichrichter daher möglichst kurz vor dem Ende des Kommutierungsvorgangs aktiv geschaltet. Da die Dauer des Kommutierungsvorgangs von den genannten Parametern abhängt, wird die Aktivschaltungsverzögerungszeitdauer vorzugsweise in Abhängigkeit von diesen Parametern bestimmt. Die Passivschaltungsverzögerungszeitdauer ist vergleichsweise weniger relevant für den Wirkungsgrad des Gleichspannungswandlers und kann daher fest vorgegeben und fest eingestellt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1    einen Schaltplan eines Gleichspannungswandlers,
FIG 2    ein Ersatzschaltbild eines Transformators eines Gleichspannungswandlers,

FIG 3     zueinander korrespondierende zeitliche Verläufe einer gleichgerichteten Sekundärspannung, eines Primärstroms und von Schaltzuständen von Halbleiterschaltern eines Gleichspannungswandlers,

FIG 4     zeitliche Verläufe einer Primärspannung, eines Primärstroms, eines Magnetisierungsstroms und eines transformierten Sekundärstroms bei einer Ausführung eines Gleichspannungswandlers mit einem Transformator ohne einen Luftspalt, und

FIG 5     zeitliche Verläufe einer Primärspannung, eines Primärstroms, eines Magnetisierungsstroms und eines transformierten Sekundärstroms bei einer Ausführung eines Gleichspannungswandlers mit einem Transformator mit einem Luftspalt.

Einander entsprechende Teile sind in allen Figuren mit den gleichen Bezugzeichen versehen.

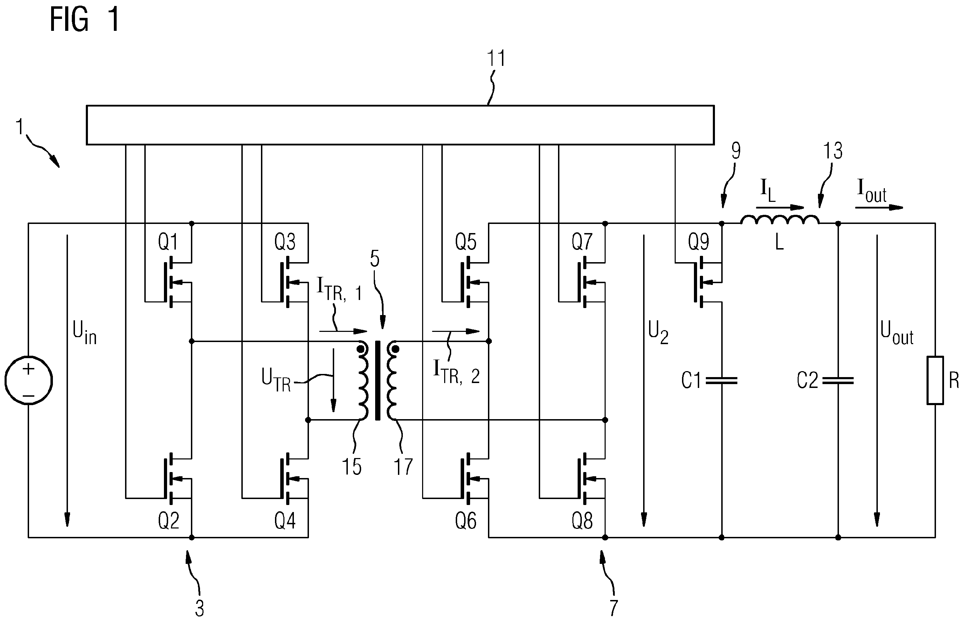

FIG 1 zeigt einen Schaltplan eines Gleichspannungswandlers 1. Der Gleichspannungswandler 1 weist einen Wechselrichter 3, einen Transformator 5, einen Gleichrichter 7, eine Clampingbaugruppe 9 und eine Steuereinheit 11 auf.

Der Wechselrichter 3 weist vier zu einer Wechselrichter-Vollbrücke verschaltete primäre Halbleiterschalter Q1 bis Q4 zum Umrichten einer Eingangsgleichspannung $U_{in}$ in eine Wechselspannung auf.

Der Gleichrichter 7 weist vier zu einer Gleichrichter-Vollbrücke zusammengeschaltete sekundäre Halbleiterschalter Q5 bis Q8 zum Gleichrichten einer Sekundärspannung des Transformators 5 und ausgangsseitig ein LC-Filter 13 mit einer Drossel L und einem Filterkondensator C2 auf. Durch die Drossel L fließt ein Drosselstrom $I_L$. Ausgangsseitig wird von dem Gleichrichter 7 ein Ausgangsstrom $I_{out}$ ausgegeben.

Der Transformator 5 weist eine Primärwicklung 15 und eine Sekundärwicklung 17 auf. Die Primärwicklung 15 ist in dem Brückenzweig der Wechselrichter-Vollbrücke angeordnet. Die Sekundärwicklung 17 ist in dem Brückenzweig der Gleichrichter-Vollbrücke angeordnet. Durch die Primärwicklung 15 fließt ein Primärstrom $I_{TR,1}$. Durch die Sekundärwicklung 17 fließt ein Sekundärstrom $I_{TR,2}$. An der Primärwicklung 15 liegt eine Primärspannung $U_{TR}$ an.

Die Clampingbaugruppe 9 ist parallel zu der Gleichrichter-Vollbrücke zwischen die Gleichrichter-Vollbrücke und das LC-Filter 13 geschaltet und weist einen Zusatz-Halbleiterschalter Q9 und einen in Reihe geschalteten Clampingkondensator C1 auf. An der Clampingbaugruppe 9 liegt die gleichgerichtete Sekundärspannung $U_2$ des Transformators 5 an.

Jeder Halbleiterschalter Q1 bis Q9 ist als ein Feldeffekttransistor, genauer als ein normal sperrender n-Kanal MOSFET (= Metal-Oxide-Semiconductor Field-Effect Transistor), ausgebildet. Jede Halbbrücke der Wechselrichter-Vollbrücke weist einen ersten primären Halbleiterschalter Q1, Q3, dessen Source mit dem Brückenzweig der Wechselrichter-Vollbrücke verbunden ist, und einen zweiten primären Halbleiterschalter Q2, Q4, dessen Drain mit dem Brückenzweig der Wechselrichter-Vollbrücke verbunden ist, auf. Jede Halbbrücke der Gleichrichter-Vollbrücke weist einen ersten sekundären Halbleiterschalter Q5, Q7, dessen Source mit dem Brückenzweig der Gleichrichter-Vollbrücke verbunden ist, und einen zweiten sekundären Halbleiterschalter Q6, Q8, dessen Drain mit dem Brückenzweig der Gleichrichter-Vollbrücke verbunden ist, auf. Die Source des Zusatz-Halbleiterschalters Q9 ist mit den Drains der beiden ersten sekundären Halbleiterschalter Q5, Q7 verbunden, die Drain des Zusatz-Halbleiterschalters Q9 ist mit dem Clampingkondensator C1 verbunden.

Die Steuereinheit 11 ist zur Ansteuerung der Halbleiterschalter Q1 bis Q9 ausgebildet. Der Übersichtlichkeit halber sind in Figur 1 die Verbindungen der Steuereinheit 11 mit den Halbleiterschaltern Q1 bis Q9 nur schematisch dargestellt, indem für jeden Halbleiterschalter Q1 bis Q9 lediglich eine Verbindung der Steuereinheit 11 mit dem Gate des Halbleiterschalters Q1 bis Q9 dargestellt ist.

In FIG 1 ist ferner eine Last R dargestellt, an der eine Ausgangsspannung $U_{out}$ des Gleichrichters 7 anliegt.

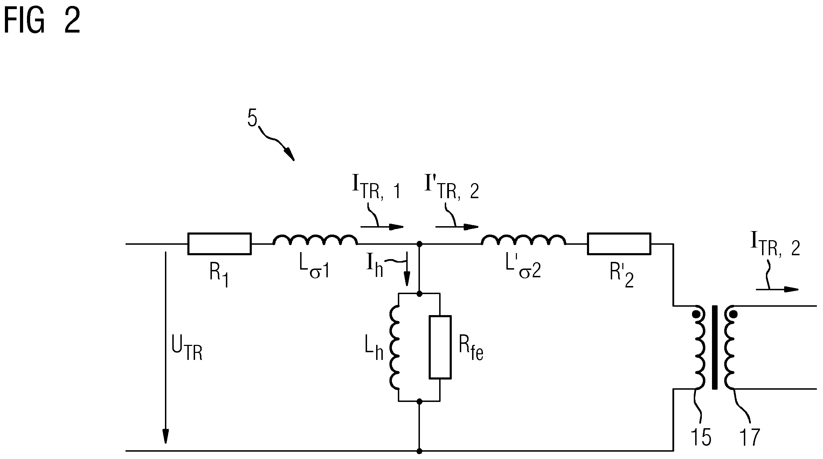

FIG 2 zeigt ein Ersatzschaltbild des Transformators 5 des Gleichspannungswandlers 1. Darin bezeichnen $R_1$ einen primären ohmschen Widerstand des Transformators 5, $L_{\sigma1}$ eine primäre Streuinduktivität des Transformators 5, $I_h$ einen Magnetisierungsstrom des Transformators 5, $L_h$ eine Hauptinduktivität des Transformators 5, $R_{fe}$ einen Eisenverlustwiderstand des Transformators 5, $I'_{TR,2}$ einen transformierten Sekundärstrom des Transformators 5, $L'_{\sigma2}$ eine transformierte sekundäre Streuinduktivität des Transformators 5 und $R'_2$ einen transformierten sekundären ohmschen Widerstand des Transformators 5. Die transformierten Größen $I'_{TR,2}$, $L'_{\sigma2}$ und $R'_2$ sind auf die Primärwicklung 15 umgerechnete entsprechende Größen der Sekundärwicklung 17 des Transformators 5.

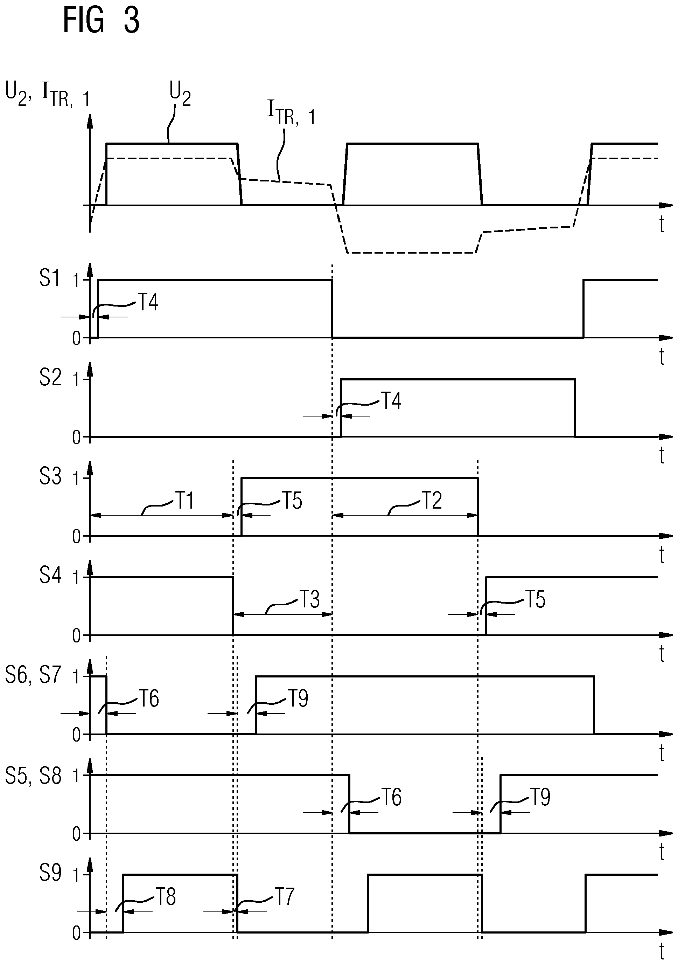

FIG 3 zeigt ein erfindungsgemäßes Verfahren zum Betrieb des Gleichspannungswandlers 1 anhand zueinander korrespondierender Verläufe der gleichgerichteten Sekundärspannung $U_2$, des Primärstroms $I_{TR,1}$ und von Schaltzuständen S1 bis S9 der Halbleiterschalter Q1 bis Q9 in Abhängigkeit von einer Zeit t, wobei Sn den Schaltzustand von Qn bezeichnet (für n = 1,...,9), der Wert 1 einen Einschaltzustand des jeweiligen Halbleiterschalters Q1 bis Q9 bezeichnet und der Wert 0 einen Abschaltzustand des jeweiligen Halbleiterschalters Q1 bis Q9 bezeichnet.

Die primären Halbleiterschalter Q1 bis Q4 werden derart angesteuert, dass von dem Wechselrichter 3 eine Wechselspannung erzeugt wird, die abwechselnd während einer ersten Aktivphase T1 ein oberes Spannungsniveau und während einer zweiten Aktivphase T2 ein unteres Spannungsniveau annimmt. Zwischen je zwei aufeinander folgenden Aktivphasen T1, T2 wird der Transformator 5 in einer Freilaufphase T3 betrieben, in der die Primärwicklung 15 kurzgeschlossenen wird, d. h. in der beide Enden der Primärwicklung 15 durch die primären Halbleiterschalter Q1 bis Q4 auf dasselbe elektrische Potential gelegt werden.

In jede erste Aktivphase T1 wird durch Abschalten des zweiten primären Halbleiterschalters Q2 und Einschalten des ersten primären Halbleiterschalters Q1 einer ersten Halbbrücke der Wechselrichter-Vollbrücke geschaltet. In jede zweite Aktivphase T2 wird durch Abschalten des ersten primären Halbleiterschalters Q1 und Einschalten des zweiten primären Halbleiterschalters Q2 der ersten Halbbrücke der Wechselrichter-Vollbrücke geschaltet. Zwischen dem Abschalten eines primären Halbleiterschalters Q1, Q2 und dem Einschalten des jeweils anderen primären Halbleiterschalters Q1, Q2 der ersten Halbbrücke der Wechselrichter-Vollbrücke liegt eine erste Totzeit T4.

In jede Freilaufphase T3 wird durch Abschalten eines primären Halbleiterschalters Q3, Q4 und Einschalten des jeweils anderen primären Halbleiterschalters Q3, Q4 der zweiten Halbbrücke der Wechselrichter-Vollbrücke geschaltet. Zwischen dem Abschalten eines primären Halbleiterschalters Q3, Q4 und dem Einschalten des jeweils anderen primären Halbleiterschalters Q3, Q4 der zweiten Halbbrücke der Wechselrichter-Vollbrücke liegt eine zweite Totzeit T5.

Die Clampingbaugruppe 9 wird durch den Zusatz-Halbleiterschalter Q9 nach dem Beginn jeder Freilaufphase T3 abgeschaltet und nach dem Beginn jeder Aktivphase T1, T2 eingeschaltet.

Die sekundären Halbleiterschalter Q5 bis Q8 werden derart angesteuert, dass der Gleichrichter 7 nach dem Beginn jeder Aktivphase T1, T2 aktiv geschaltet wird und nach jedem Abschalten der Clampingbaugruppe 9 passiv geschaltet wird. In der Passivschaltung des Gleichrichters 7 sind alle Halbleiterschalter Q5 bis Q8 der Gleichrichter-Vollbrücke eingeschaltet. In der Aktivschaltung des Gleichrichters 7 sind demgegenüber der erste Halbleiterschalter Q5, Q7 einer Halbbrücke und der zweite Halbleiterschalter Q6, Q8 der jeweils anderen Halbbrücke der Gleichrichter-Vollbrücke abgeschaltet.

Zwischen den Beginn jeder Aktivphase T1, T2 und das Aktivschalten des Gleichrichters 7 wird eine Aktivschaltungsverzögerungszeitdauer T6 gelegt. Die Aktivschaltungsverzögerungszeitdauer T6 wird derart bestimmt, dass der Gleichrichter 7 zu einem Zeitpunkt aktiv geschaltet wird, zu dem ein Kommutierungsvorgang der sekundären Halbleiterschalter Q5 bis Q8 nach dem Beginn der jeweiligen Aktivphase T1, T2 ganz oder fast abgeschlossen ist. Dadurch wird vorteilhaft ein Aktivschalten des Gleichrichters 7 nach dem Ende des Kommutierungsvorgangs verhindert, das einem sekundärseitigen Kurzschließen des Transformators 5 entspricht und zu hohen Strömen und dadurch verursachten Verlusten führen würde. Durch ein Aktivschalten des Gleichrichters 7 möglichst kurz vor dem Ende des Kommutierungsvorgangs werden zudem Leitendverluste vermieden, die bei einem zu frühen Aktivschalten des Gleichrichters 7 durch einen Stromfluss durch Bodydioden sekundärer Halbleiterschalter Q5 bis Q8 entstehen würden.

Die Kommutierungsdauer des Kommutierungsvorgangs lässt sich in guter Näherung durch folgende Gleichung berechnen:

$$\Delta t = \frac{1}{U_{in} \cdot a} \cdot \left( L_{\sigma 1} + \frac{L'_{\sigma 2}}{1 + \frac{L'_{\sigma 2}}{L_h}} \right) \cdot \left( I_L(t_0) - \left( I_{TR,1}(t_0) + \frac{U_{in} \cdot t_{on}}{2 \cdot L_h} \right) \cdot a \right), \qquad [1]$$

wobei a das Übersetzungsverhältnis des Transformators 5 ist, $I_L(t_0)$ der Drosselstrom $I_L$ zum Zeitpunkt $t_0$ des Beginns der jeweiligen Aktivphase T1, T2 ist, $I_{TR,1}(t_0)$ der Primärstrom $I_{TR,1}$ zum Zeitpunkt to ist und $t_{on}$ die Dauer der vorhergehenden Aktivphase T1, T2 ist.

Gleichung [1] wird daher vorzugsweise verwendet, um die Aktivschaltungsverzögerungszeitdauer T6 zu bestimmen, wobei die Aktivschaltungsverzögerungszeitdauer T6 vorzugsweise durch Subtraktion einer vorgebbaren Sicherheitszeitdauer von der mit Gleichung [1] berechneten Kommutierungsdauer $\Delta t$ gebildet wird. Die Subtraktion der Sicherheitszeitdauer von der mit Gleichung [1] berechneten Kommutierungsdauer berücksichtigt vorteilhaft, dass Gleichung [1] nur eine Näherung der Kommutierungsdauer liefert und die Werte der Induktivitäten sowie die Messwerte der Ströme Toleranzen aufweisen.

Gleichung [1] wird beispielsweise in einen Algorithmus überführt, mit dem durch die Steuereinheit 11 die Kommutierungsdauer laufend neu berechnet wird und daraus die Aktivschaltungsverzögerungszeitdauer T6 bestimmt wird. Dies ermöglicht vorteilhaft, während eines Kommutierungsvorgangs die sekundären Halbleiterschalter Q5 bis Q8 bis kurz vor dem Ende des Kommutierungsvorgangs voll durchgesteuert zu lassen und dadurch Leitendverluste zu vermeiden, die andernfalls durch einen Strom durch Bodydioden sekundärer Halbleiterschalter Q5 bis Q8 entstehen würden.

Zwischen den Beginn jeder Freilaufphase T3 und das Abschalten der Clampingbaugruppe 9 wird eine Abschaltverzögerungszeitdauer T7 gelegt. Die Abschaltverzögerungszeitdauer T7 wird als eine Stellgröße für eine Regelung des Primärstroms $I_{TR,1}$ verwendet, der während der Freilaufphase T3 als ein primärer Freilaufstrom durch die Primärwicklung 15 des Transformators 5 fließt und der durch die Abschaltverzögerungszeitdauer T7 auf einen Sollwert geregelt wird. Dabei wird ausgenutzt, dass der primäre Freilaufstrom durch die Clampingbaugruppe 9 beeinflusst werden kann, wobei die Abschaltverzögerungszeitdauer T7 einen wesentlichen Einfluss auf die Höhe des primären Freilaufstroms hat, denn je größer die Abschaltverzögerungszeitdauer T7 ist, desto kleiner ist der primäre Freilaufstrom. Der Sollwert des primären Freilaufstroms wird dabei beispielsweise in Abhängigkeit von der Eingangsgleichspannung $U_{in}$ und/oder von dem Ausgangsstrom $I_{out}$ bestimmt, um durch primäre Freilaufströme verursachte Leitendverluste der primären Halbleiterschalter Q1 bis Q4 zu reduzieren und den Wirkungsgrad des Gleichspannungswandlers 1 zu optimieren. Um die Abschaltverzögerungszeitdauer T7 einzustellen, wird beispielsweise ein Mikrocontroller mit hochauflösenden Pulsweitenmodulationsmodulen verwendet.

Neben der Regelung des primären Freilaufstroms ermöglicht die Clampingbaugruppe 9 die Klemmung der Sekundärspannung (so genanntes Active Clamping). Durch das Einschalten des Zusatz-Halbleiterschalters Q9 in einer Aktivphase T1, T2 nimmt der Clampingkondensator C1 "überschüssige Energie" aus den Streuinduktivitäten des Transformators 5 auf und speist sie in der zweiten Hälfte der Aktivphase T1, T2 wieder zurück. Dadurch werden vorteilhaft Schwingungen der Sekundärspannung deutlich reduziert bzw. vermieden. Dabei geschieht die Klemmung der Sekundärspannung fast verlustfrei, weil die Energie nicht in Wärme umgesetzt, sondern wieder zurückgespeist wird. Es fallen lediglich die Leitend- und Schaltverluste des Zusatz-Halbleiterschalters Q9 sowie geringe Verluste im Clampingkondensator C1 an. Gegenüber einem Gleichspannungswandler 1 ohne Clampingbaugruppe 9 können dadurch im Gleichrichter 7 vorteilhaft sekundäre Halbleiterschalter Q5 bis Q8 mit deutlich kleinerer Sperrspannung und somit wesentlich besserem Leitendwiderstand eingesetzt werden.

Die Clampingbaugruppe 9 wird nach dem Beginn einer Aktivphase T1, T2 zu einem Zeitpunkt eingeschaltet, zu dem die gleichgerichtete Sekundärspannung $U_2$ des Transformators 5 in dieser Aktivphase T1, T2 einen Endwert erreicht hat, d.h. vollständig aufgebaut ist. Dazu wird zwischen das Aktivschalten des Gleichrichters 7 und das Einschalten der Clampingbaugruppe 9 eine Einschaltverzögerungszeitdauer T8 gelegt. Für die Einschaltverzögerungszeitdauer T8 wird beispielsweise eine Tabelle in Abhängigkeit von der Eingangsgleichspannung $U_{in}$ und/oder von dem Ausgangsstrom $I_{out}$ vorgegeben.

Ferner wird eine Passivschaltungsverzögerungszeitdauer T9 vorgegeben und der Gleichrichter 7 wird nach jedem Abschalten der Clampingbaugruppe 9 um die Passivschaltungsverzögerungszeitdauer T9 verzögert passiv geschaltet.

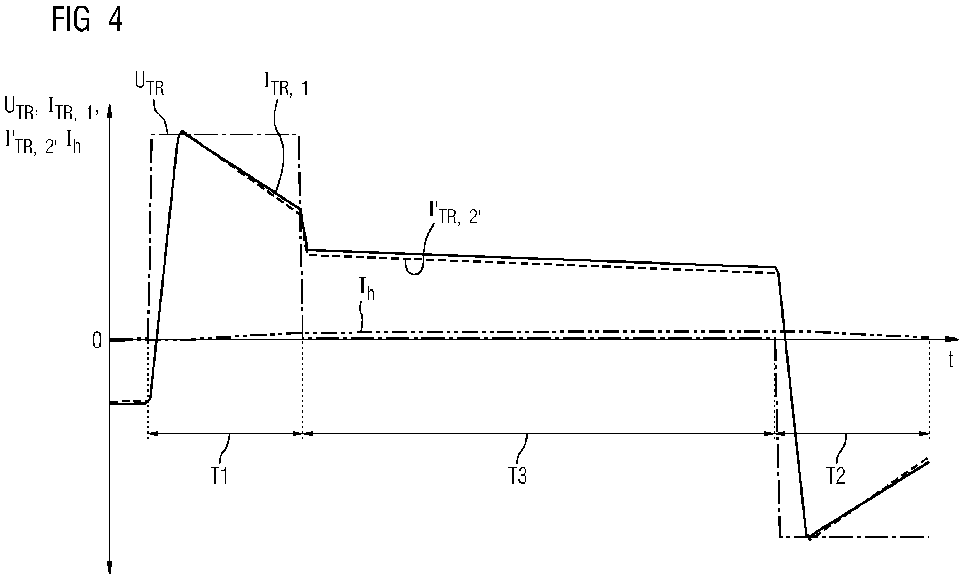

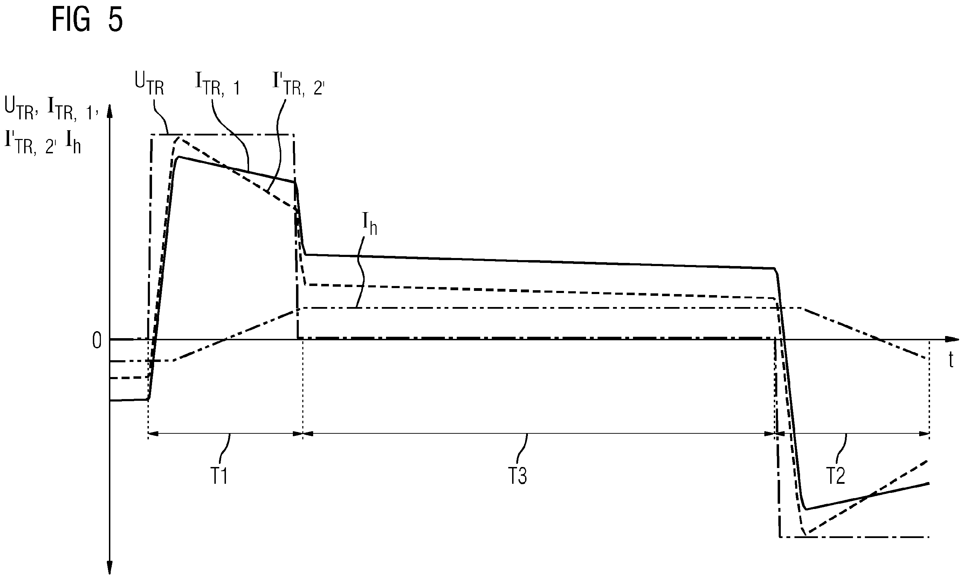

Ein Ausführungsbeispiel der Erfindung sieht vor, dass der Transformator 5 als ein Luftspalttransformator ausgeführt ist. Im Folgenden werden anhand der Figuren 4 und 5 Unterschiede und Vorteile einer Ausführung des Gleichspannungswandlers 1 mit einem als ein Luftspalttransformator ausgeführten Transformator 5 gegenüber einer Ausführung des Gleichspannungswandlers 1 mit einem Transformator 5 ohne Luftspalt aufgezeigt.

FIG 4 zeigt zeitliche Verläufe der Primärspannung $U_{TR}$, des Primärstroms $I_{TR,1}$, des Magnetisierungsstroms $I_h$ und des transformierten Sekundärstroms $I'_{TR,2}$ bei einer Ausführung des Gleichspannungswandlers 1 mit einem Transformator 5 ohne einen Luftspalt.

FIG 5 zeigt zeitliche Verläufe der Primärspannung $U_{TR}$, des Primärstroms $I_{TR,1}$, des Magnetisierungsstroms $I_h$ und des transformierten Sekundärstroms $I'_{TR,2}$ bei einer Ausführung des Gleichspannungswandlers 1 mit einem Transformator 5 mit einem Luftspalt, wobei der Gleichspannungswandler 1 abgesehen von dem Luftspalt des Transformators 5 wie der FIG 4 zugrunde liegende Gleichspannungswandler 1 ausgeführt ist und betrieben wird.

Die Figuren 4 und 5 zeigen zunächst, dass der Betrag des Primärstroms $I_{TR,1}$ kurz nach dem Beginn einer Aktivphase T1, T2 sein Maximum erreicht. Dies ist darauf zurückzuführen, dass eine gewisse Zeit vergeht, bis im Gleichrichter 7 die Kommutierung abgeschlossen ist. Bis dahin steigt der Primärstrom $I_{TR,1}$ weiter an. Die Figuren 4 und 5 zeigen, dass das Maximum des Primärstroms $I_{TR,1}$ bei einem Transformator 5 ohne Luftspalt deutlich höher ausfällt. Das ist auf den Magnetisierungsstrom $I_h$ zurückzuführen, der bei einem Transformator 5 mit Luftspalt einen deutlich größeren Betrag als bei einem Transformator 5 ohne Luftspalt hat. Zu Beginn der Aktivphase T1 ist der Magnetisierungsstrom $I_h$ noch negativ und kompensiert so einen großen Teil der Stromspitze. Daraus ergeben sich zwei wesentliche Vorteile der Verwendung eines Transformators 5 mit Luftspalt. Zum Einen wird dadurch der Effektivwert des Primärstroms $I_{TR,1}$ etwas verringert. Dies ist in dem in den Figuren 4 und 5 gezeigten Beispiel vor allem deshalb vorteilhaft, da hier die höchsten Ströme im gesamten Gleichspannungswandler 1 fließen und dadurch auch die größten Leitendverluste entstehen. Zum Anderen wird durch die kleinere Stromspitze ein (in FIG 1 nicht dargestelltes) Eingangsfilter weniger stark belastet und es werden dort ebenfalls weniger Verluste verursacht. Vor allem aber kann das Eingangsfilter entsprechend kleiner ausgelegt und die leitungsgebundenen Störungen trotzdem auf dem gleichen Niveau gehalten werden.

In der auf die Aktivphase T1, T2 folgenden Freilaufphase T3 ist den Figuren 4 und 5 eine weitere Auffälligkeit zu entnehmen. Während der Primärstrom $I_{TR,1}$ in beiden Fällen gleich groß ist, weil dieser mit Hilfe der Clampingbaugruppe 9 auf einen gewünschten Wert geregelt wurde, zeigt sich ein deutlicher Unterschied beim transformierten Sekundärstrom $I'_{TR,2}$, der im Falle des Transformators 5 mit Luftspalt deutlich kleiner als im Falle des Transformators 5 ohne Luftspalt ist. Dieser Unterschied ist wieder auf den beim Luftspalttransformator deutlich höheren Magnetisierungsstrom $I_h$ zurückzuführen, denn der Primärstrom $I_{TR,1}$ setzt sich aus dem transformierten Sekundärstrom $I'_{TR,2}$ und dem Magnetisierungsstrom $I_h$ zusammen. Ist der Magnetisierungsstrom $I_h$ bei gleichem Primärstrom $I_{TR,1}$ größer, ist $I'_{TR,2}$ entsprechend kleiner. Bei gleichem Primärstrom $I_{TR,1}$ sorgt die kleinere Hauptinduktivität $L_h$ des Luftspalttransformators demzufolge für eine deutliche Senkung des sekundären Transformatorstroms $I_{TR,2}$ und damit auch dessen Effektivwerts.

Dieser Vorteil ergibt sich nur im Zusammenhang mit der Clampingbaugruppe 9, die die Stellung des primären Freilaufstroms ermöglicht. Ohne die Clampingbaugruppe 9 hätte die kleinere Hauptinduktivität $L_h$ lediglich zur Folge, dass primärseitig (bei sonst gleichen Verhältnissen) ein größerer Freilaufstrom flösse, während sich sekundärseitig praktisch keine Änderung ergäbe.

Neben diesen Vorteilen hinsichtlich des Betriebs des Gleichspannungswandlers 1 hat der Luftspalttransformator einen weiteren Nutzen in Bezug auf die Betriebssicherheit. Prinzipiell kann es bei einem Vollbrückenwandler aufgrund leichter Asymmetrien dazu kommen, dass die Primärspannung $U_{TR}$ einen Gleichanteil erhält. Dieser kann zum Beispiel durch nicht völlig symmetrische Ansteuersignale oder asymmetrisches Verhalten der Treiber der primären Halbleiterschalter Q1 bis Q4 entstehen. Ist der Gleichanteil groß genug, kann der Transformator 5 in Sättigung geraten, was unbedingt zu vermeiden ist.

Üblicherweise wird deswegen entweder auf eine primärseitige Spitzenstromregelung zurückgegriffen, die den Spitzenwert des Primärstroms $I_{TR,1}$ stellt. Oder es wird ein entsprechend dimensionierter Kondensator in Reihe zum Transformator 5 geschaltet, der Gleichanteile effektiv verhindert. Ersteres ist durch die vollkommen anderen Stromverläufe, die in einem Gleichspannungswandler 1 mit der Clampingbaugruppe 9 gegenüber einem herkömmlichen Gleichspannungswandler 1 ohne Clampingbaugruppe 9 entstehen, nicht möglich, da das Maximum des Betrags des Primärstroms $I_{TR,1}$ bereits kurz nach Beginn einer Aktivphase T1, T2 auftreten kann. Ein in Reihe zum Transformator 5 geschalteter Kondensator hat den Nachteil, dass ein weiteres Bauteil benötigt wird, welches weitere Verluste und Kosten verursacht und Platz auf der Baugruppe benötigt. Ein ausreichend dimensionierter Kondensator hätte in dieser Anwendung bereits beachtliche Ausmaße.

Stattdessen wird der Luftspalttransformator für eine größere Toleranz gegenüber Gleichanteilen genutzt. Er würde zwar theoretisch bei einer Asymmetrie der Spannungszeitflächen genauso schnell in Sättigung gehen wie der ansonsten gleich aufgebaute Transformator 5 ohne Luftspalt. Da der Sättigungsstrom viel höher ist, müsste jedoch ein deutlich größerer Gleichanteil des Primärstroms $I_{TR,1}$ fließen. Diesem Gleichstrom stehen aber die ohmschen Widerstände des Lufttransformators selbst, der Leiterbahnen auf der Platine und der primären Halbleiterschalter Q1 bis Q4 entgegen. Das bedeutet, dass die Asymmetrien umso größer sein dürfen, je größer der Sättigungsstrom des Transformators 5 ist. Die Toleranz gegenüber Asymmetrien in der Ansteuerung der primären Halbleiterschalter Q1 bis Q4 wird dadurch bei der Verwendung eines Lufttransformators so groß, dass auf einen Kondensator in Reihe zu dem Lufttransformator verzichtet werden kann.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Gleichspannungswandler (1), umfassend

    - einen Wechselrichter (3) mit vier zu einer Wechselrichter-Vollbrücke verschalteten primären Halbleiterschaltern (Q1 bis Q4) zum Umrichten einer Eingangsgleichspannung ($U_{in}$) in eine Wechselspannung,
    - einen Transformator (5) mit einer in dem Brückenzweig der Wechselrichter-Vollbrücke angeordneten Primärwicklung (15) und einer Sekundärwicklung (17),
    - einen mit der Sekundärwicklung (17) verbundenen Gleichrichter (7) zum Gleichrichten einer Sekundärspannung des Transformators (5),
    - eine Clampingbaugruppe (9), die einen Zusatz-Halbleiterschalter (Q9) und einen zu dem Zusatz-Halbleiterschalter (Q9) in Reihe geschalteten Clampingkondensator (C1) aufweist und an der die gleichgerichtete Sekundärspannung ($U_2$) des Transformators (5) anliegt,
    - und eine Steuereinheit (11) zur Ansteuerung der primären Halbleiterschalter (Q1 bis Q4) und des Zusatz-Halbleiterschalters (Q9).

2. Gleichspannungswandler (1) nach Anspruch 1, **dadurch gekennzeichnet, dass** der Gleichrichter (7) vier zu einer Gleichrichter-Vollbrücke verschaltete, von der Steuereinheit (11) ansteuerbare sekundäre Halbleiterschalter (Q5 bis Q8) aufweist, die Sekundärwicklung (17) des Transformators (5) in dem Brückenzweig der Gleichrichter-Vollbrücke angeordnet ist und die Clampingbaugruppe (9) parallel zu der Gleichrichter-Vollbrücke geschaltet ist.

3. Gleichspannungswandler (1) nach Anspruch 1 oder 2, **dadurch gekennzeichnet, dass** der Gleichrichter (7) ausgangsseitig ein LC-Filter (13) mit einer Drossel (L) und einem Filterkondensator (C2) aufweist.

4. Gleichspannungswandler (1) nach einem der vorhergehenden Ansprüche, **dadurch gekennzeichnet, dass** jeder primäre Halbleiterschalter (Q1 bis Q4) und/oder der Zusatz-Halbleiterschalter (Q9) als ein Feldeffekttransistor ausgebildet ist.

5. Gleichspannungswandler (1) nach einem der vorhergehenden Ansprüche, **dadurch gekennzeichnet, dass** der Transformator (5) ein Luftspalttransformator ist.

6. Verfahren zum Betrieb eines gemäß einem der vorhergehenden Ansprüche ausgebildeten Gleichspannungswandlers (1), wobei

- von dem Wechselrichter (3) eine Wechselspannung erzeugt wird, die abwechselnd während einer ersten Aktivphase (T1) ein oberes Spannungsniveau und während einer zweiten Aktivphase (T2) ein unteres Spannungsniveau annimmt,
- der Transformator (5) zwischen je zwei aufeinander folgenden Aktivphasen (T1,T2) in einer Freilaufphase (T3) betrieben wird, in der die Primärwicklung (15) kurzgeschlossenen wird,
- und die Clampingbaugruppe (9) durch den Zusatz-Halbleiterschalter (Q9) nach dem Beginn jeder Freilaufphase (T3) abgeschaltet wird und nach dem Beginn jeder Aktivphase (T1, T2) eingeschaltet wird.

7. Verfahren nach Anspruch 6, **dadurch gekennzeichnet, dass** eine Abschaltverzögerungszeitdauer (T7) für das Abschalten der Clampingbaugruppe (9) nach dem Beginn einer Freilaufphase (T3) als eine Stellgröße für eine Regelung eines Primärstroms ($I_{TR,1}$), der während der Freilaufphase (T3) als ein primärer Freilaufstrom durch die Primärwicklung (15) des Transformators (5) fließt und der durch die Abschaltverzögerungszeitdauer (T7) auf einen Sollwert geregelt wird, verwendet wird.

8. Verfahren nach Anspruch 7, **dadurch gekennzeichnet, dass** der Sollwert des primären Freilaufstroms in Abhängigkeit von der Eingangsgleichspannung ($U_{in}$) und/oder von einem Ausgangsstrom ($I_{out}$) des Gleichspannungswandlers (1) bestimmt wird.

9. Verfahren nach einem der Ansprüche 6 bis 8, **dadurch gekennzeichnet, dass** die Clampingbaugruppe (9) nach dem Beginn einer Aktivphase (T1,T2) zu einem Zeitpunkt eingeschaltet wird, zu dem die gleichgerichtete Sekundärspannung ($U_2$) des Transformators (5) in dieser Aktivphase (T1, T2) einen Endwert erreicht hat.

10. Verfahren nach einem der Ansprüche 6 bis 9, wobei der Gleichrichter (7) vier zu einer Gleichrichter-Vollbrücke zusammengeschaltete, von der Steuereinheit (11) ansteuerbare sekundäre Halbleiterschalter (Q5 bis Q8) aufweist und die Sekundärwicklung (17) des Transformators (5) in dem Brückenzweig der Gleichrichter-Vollbrücke angeordnet ist, **dadurch gekennzeichnet, dass** der Gleichrichter (7) nach dem Beginn jeder Aktivphase (T1,T2) um eine Aktivschaltungsverzögerungszeitdauer (T6) verzögert aktiv geschaltet wird.

11. Verfahren nach Anspruch 10, **dadurch gekennzeichnet, dass** die Aktivschaltungsverzögerungszeitdauer (T6) kleiner oder gleich einer Kommutierungsdauer eines sekundärseitigen Kommutierungsvorgangs nach dem Beginn der jeweiligen Aktivphase (T1,T2) ist.

12. Verfahren nach Anspruch 10 oder 11, **dadurch gekennzeichnet, dass** die Aktivschaltungsverzögerungszeitdauer (T6) in Abhängigkeit von wenigstens einem der folgenden Parameter bestimmt wird:

- Eingangsgleichspannung ($U_{in}$),
- Hauptinduktivität ($L_h$) des Transformators (5),
- primäre Streuinduktivität ($L_{\sigma 1}$) des Transformators (5),
- sekundäre Streuinduktivität des Transformators (5),
- Dauer der vorhergehenden Aktivphase (T1,T2),
- Ausgangsstrom ($I_{out}$) des Gleichspannungswandlers (1) zum Zeitpunkt des Beginns der Aktivphase (T1,T2),
- Primärstrom ($I_{TR,1}$) durch die Primärwicklung (15) zum Zeitpunkt des Beginns der Aktivphase (T1,T2).

13. Verfahren nach einem der Ansprüche 10 bis 12, **dadurch gekennzeichnet, dass** eine Passivschaltungsverzögerungszeitdauer (T9) vorgegeben wird und der Gleichrichter (7) nach jedem Abschalten der Clampingbaugruppe (9) um die Passivschaltungsverzögerungszeitdauer (T9) verzögert passiv geschaltet wird.

FIG 1

EP 3 324 528 A1

EP 3 324 528 A1

FIG 2

FIG 3

FIG 4

FIG 5

**Europäisches Patentamt**
**European Patent Office**
**Office européen des brevets**

## EUROPÄISCHER RECHERCHENBERICHT

Nummer der Anmeldung

EP 16 19 9837

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/214847 A1 (SHIMADA TAKAE [JP] ET AL) 30. Juli 2015 (2015-07-30) | 1-7,9-13 | INV. H02M1/32 H02M3/335 |
| A | * Zusammenfassung * * Absätze [0072], [0083] - [0089]; Abbildungen 1-7 * | 8 | ADD. H02M1/00 |
| | ----- | | |
| X | DE 10 2015 012343 A1 (DAIMLER AG [DE]) 7. April 2016 (2016-04-07) | 1-6 | |
| A | * Zusammenfassung; Abbildungen 1, 2 * | 7-13 | |
| | ----- | | |
| X | EP 2 528 218 A2 (HITACHI LTD [JP]; HITACHI MITO ENG KK [JP]) 28. November 2012 (2012-11-28) | 1-6 | |
| A | * Zusammenfassung; Abbildung 1 * | 7-13 | |
| | ----- | | |
| A | US 6 388 896 B1 (CUK SLOBODAN [US]) 14. Mai 2002 (2002-05-14) * Zusammenfassung; Abbildungen 4, 5, 7 * | 1-13 | |
| | ----- | | |

**RECHERCHIERTE SACHGEBIETE (IPC)**

H02M

Der vorliegende Recherchenbericht wurde für alle Patentansprüche erstellt

| Recherchenort | Abschlußdatum der Recherche | Prüfer |
|---|---|---|
| Den Haag | 26. April 2017 | Van der Meer, Paul |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 9837

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2017

| Im Recherchenbericht angeführtes Patentdokument | Datum der Veröffentlichung | Mitglied(er) der Patentfamilie | Datum der Veröffentlichung |
|---|---|---|---|
| US 2015214847 A1 | 30-07-2015 | CN 104811043 A<br>JP 2015139358 A<br>US 2015214847 A1 | 29-07-2015<br>30-07-2015<br>30-07-2015 |
| DE 102015012343 A1 | 07-04-2016 | KEINE | |
| EP 2528218 A2 | 28-11-2012 | CN 102801327 A<br>EP 2528218 A2<br>JP 5690654 B2<br>JP 2012249351 A<br>KR 20120132384 A<br>US 2012300501 A1 | 28-11-2012<br>28-11-2012<br>25-03-2015<br>13-12-2012<br>05-12-2012<br>29-11-2012 |
| US 6388896 B1 | 14-05-2002 | KEINE | |

EPO FORM P0461

Für nähere Einzelheiten zu diesem Anhang : siehe Amtsblatt des Europäischen Patentamts, Nr.12/82